(19) Europäisches Patentamt
European Patent Office
Office européen des brevets

(11) **EP 2 256 521 A1**

(12) **EUROPÄISCHE PATENTANMELDUNG**

(43) Veröffentlichungstag:
**01.12.2010 Patentblatt 2010/48**

(51) Int Cl.:
*G01V 3/08* [(2006.01)]      *G01V 15/00* [(2006.01)]

(21) Anmeldenummer: **09006979.0**

(22) Anmeldetag: **25.05.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(71) Anmelder: **Fraunhofer-Gesellschaft zur Förderung der angewandten Forschung e.V. 80686 München (DE)**

(72) Erfinder:
• **Hackner, Michael**
  **93155 Hemau OT Haag (DE)**
• **Peters, Volker**
  **90766 Fürth (DE)**
• **Saurerer, Josef**
  **91074 Herzogenaurach (DE)**

(74) Vertreter: **Gagel, Roland**
  **Patentanwaltskanzlei**
  **Dr. Roland Gagel**
  **Landsberger Strasse 480 a**
  **D-81241 München (DE)**

(54) **Verfahren und Anordnung zur magnetischen Positionsbestimmung**

(57)     Die vorliegende Erfindung betrifft ein Verfahren und eine Anordnung zur magnetischen Positionsbestimmung mit Hilfe eines Permanentmagneten (1), bei denen mit einem Positionssensor (2) der Vektor und der örtliche Gradient der magnetischen Flussdichte des Permanentmagneten (1) gemessen und aus den Messwerten die Position und Orientierung des magnetischen Dipols des Permanentmagneten (1) relativ zum Positionssensor (2) berechnet werden. Bei dem Verfahren und der Anordnung wird ein kugelförmiger Permanentmagnet (1) mit homogener Magnetisierung eingesetzt, der eine bisher bestehende Querempfindlichkeit zwischen Positions- und Orientierungsbestimmung vermeidet und eine Messung ohne vorherige Kalibrierung ermöglicht.

Fig. 1

**Beschreibung**

**Technisches Anwendungsgebiet**

Die vorliegende Erfindung betrifft ein Verfahren sowie eine Anordnung zur magnetischen Positionsbestimmung mit Hilfe eines Permanentmagneten, bei denen am Ort eines Positionssensors der Vektor und der örtliche Gradient der magnetischen Flussdichte $\vec{B}$ des Permanentmagneten gemessen wird und aus dem Vektor und dem örtlichen Gradienten der magnetischen Flussdichte $\vec{B}$ die Position $\vec{r}$ und die Orientierung des magnetischen Dipols des Permanentmagneten relativ zum Positionssensor berechnet werden.

Eine derartige Positionsbestimmung wird bspw. in Anwendungen eingesetzt, bei denen die Position eines Körpers relativ zu einem anderen Körper oder Bezugssystem erfasst werden soll, die sich relativ zueinander bewegen. An beiden Körpern werden dann jeweils der Permanentmagnet und der Positionssensor befestigt, um über die magnetische Positionsbestimmung die momentane relative Position und evtl. Orientierung der Körper bestimmen zu können.

**Stand der Technik**

Die Ortung magnetischer Dipole stellt schon seit längerem eine Aufgabenstellung in der Geologie, der Medizin und der Wehrtechnik dar. Hier kommen die verschiedensten Methoden zum Einsatz, um den Ort und häufig auch die Orientierung magnetischer oder magnetisierbarer Gegenstände zu bestimmen. So werden vor allem in der Medizin aber auch in der Geologie häufig Methoden eingesetzt, bei denen das Magnetfeld in einer Ebene entweder in einer oder in mehreren Richtungen abgerastert wird, wodurch eine Art zweidimensionales magnetisches Bild erhalten wird. Die Bilder werden anschließend entweder durch Inaugenscheinnahme oder mit Hilfe geeigneter Algorithmen aus der Bildverarbeitung analysiert, um den Ort und die Orientierung der magnetischen Gegenstände zu bestimmen.

Weiterhin ist es bekannt, geometrische Eigenschaften des Magnetfeldes auszunutzen, um aus den magnetischen Messdaten die magnetischen Dipole zu orten. Dazu wird der Vektor der magnetischen Flussdichte an vier räumlichen Positionen gemessen, die sich nicht in einer Ebene befinden. Zunächst werden aus der Position und dem Magnetfeldvektor von jeweils zwei Positionen, die sich in verschiedenen Ebenen befinden, zwei Ebenen bestimmt. Die Schnitt-Gerade dieser beiden Ebenen ist gleichzeitig die Achse des magnetischen Dipols. Die Position des Dipols auf dieser Geraden kann dann aus weiteren geometrischen Überlegungen bestimmt werden, wie dies bspw. in G. Cauffet et al.: "Geometric Contruction Technic to Localization of a Magnetic Dipole", COMPUMAG 2001, 13th Conference on the Computation of Electromagnetic Fields, Lyon-Evian, näher erläutert ist.

In Anwendungen der Wehrtechnik, insbesondere zur Minensuche, und der Geologie findet die Ortung von Dipolen durch Messung der Gradienten mit diskret aufgebauten Magnetfeld-Sensoren statt, die durch räumliche Versetzung die Änderung des Magnetfeldes zwischen zwei verschiedenen Orten, d.h. den örtlichen Gradienten, messen können. Aus diesen Messwerten lässt sich die Position der Dipole mit Hilfe der invertierten Gradienten-Tensoren der Dipole bestimmen. Die Bestimmung der Gradienten in einer Ebene ist dafür ausreichend. Beispiele für diese Technik finden sich in S. Kumar et al., "Real-Time Tracking Magnetic Gradiometer for Underwater Mine Detection", OCEANS 04. MTTS/IEEE TECHNO-OCEAN 04, ISBN: 0-7803-8669-8/04, 2004; S. Kumar et al., "Real-Time Tracking Gradiometer for use in an Autonomous Underwater Vehicle for Buried Minehunting", OCEANS, 2005, Proceedings of MTS/IEEE, ISBN: 0-933957-34-3; Takaaki Nara et al., "A Closed-Form Formula for Magnetic Dipole Localization by Measurement of Its Magnetic Field and Spatial Gradients", IEEE TRANSACTIONS ON MAGNETICS, VOL. 42, NO. 10 October 2006, pp. 3291-3293; Frahm, C. P.: "Inversion of the magnetic field gradient equations for a magnetic dipole field", Naval Coastal Systems Laboratory, Informal Report (1972), NCSL, pp. 135-172, Panama City, Fla., oder in M. C. Jeoffreys: "DISCRIMINATION AND IDENTDIFICATION OF UNEXPLODED ORDINANCES (USO) USING AIRBORNE MAGNETIC GRADIENTS", Mathematics in Industry Study Groups in South Africa > MISGA 2006, University of the Witwatersrand (23rd - 27th January 2006).

Der Begriff des Gradienten bedeutet in diesem Fall und in der vorliegenden Patentanmeldung nicht den mathematischen Operator der Vektorrechnung, sondern die Ableitungen (bzw. Differenzen-Quotienten) nach den Richtungen im Raum (Ortsableitungen). In der Regel werden diese Ableitungen nach den drei kartesischen Koordinatenrichtungen bestimmt. Prinzipiell ist aber auch die Verwendung anderer Koordinatensysteme möglich.

Ein weiterer Ansatz, um die Position aus den gemessenen Magnetfeldern und deren Gradienten zu bestimmen, besteht darin, nicht die Feldgleichungen zu invertieren, sondern die Parameter der Feldgleichung mittels Regression so zu bestimmen, dass die Fehler zwischen Gleichungen und gemessenen Daten minimal werden (Least-Square-Fit). Eine derartige Vorgehensweise ist bspw. in S. L. Helwig et al., "Inversion von ortsaufgelösten Wirbelstrommessdaten zur Bestimmung der Lage und Geometrie von Landminen"; DGZfP-Berichtsband 94-CD, DGZfP-Jahrestagung 2005, Plakat 26 beschrieben.

Für eine Integration der Messung des Magnetfeldes eines Permanentmagneten und der Berechnung der Position bzw. Orientierung des Magneten in einen kompakten Positionssensor scheiden Methoden, die auf Screening oder Näherungen durch Fitting-Algorithmen basieren, aufgrund der hohen erforderlichen Rechenleistung aus. Soll ein derartiger Positionssensor auf einem Chip integriert sein, so kommen auch Methoden nicht in Frage, die Magnetfeld-Sensoren in verschiedenen Ebenen benötigen. Es bietet sich somit für derartige Anwendungen lediglich die obige Technik der Messung des Vektors sowie des örtlichen Gradienten der magnetischen Flussdichte an, da für diese Technik eine Anordnung der Magnetfeld-Sensoren in einer Ebene ausreichend ist. Als Permanentmagneten wurden hierzu ringförmige, zylindrische und quaderförmige Permanentmagneten eingesetzt.

Bei dieser bekannten Technik sind jedoch die lineare Position und Orientierung des Permanentmagneten bisher nicht unabhängig voneinander bestimmbar. Eine Abweichung der Orientierung von der vorgegebenen Richtung, bspw. durch eine schiefe Magnetisierung des Magneten oder Toleranzen bei der Montage, beeinflussen immer auch die Messung der linearen Position. Auch im umgekehrten Fall, d. h. wenn die Lage der Drehachse nicht optimal mit der Achse des Magneten und der Lage der Magnetfeld-Sensoren justiert ist, führt dies zu einer Abweichung der gemessenen Orientierung zur tatsächlichen Orientierung. Diese Querempfindlichkeit ist für die Anwendung dieser Technik zur Positionsbestimmung nachteilig. Weiterhin haben die ermittelten Messwerte bei dieser Technik zunächst eine willkürliche Skala, die sich zwar aus der Anordnung ergibt, aber nicht einfach zu ermitteln ist. Die Messung muss daher in der Regel kalibriert werden. Zudem ist bei linearen Bewegungen eine Linearisierung der erfassten Messwerte erforderlich, um die lineare Position zu ermitteln.

Die Aufgabe der vorliegenden Erfindung besteht darin, ein Verfahren und eine Anordnung zur magnetischen Positionsbestimmung anzugeben, die eine Integration der magnetischen Sensoren und der Auswerteelektronik in einem kompakten Positionssensor und eine Bestimmung der linearen Position und der Orientierung unabhängig voneinander ermöglichen.

**Darstellung der Erfindung**

Die Aufgabe wird mit dem Verfahren und der Anordnung gemäß den Patentansprüchen 1 und 8 gelöst. Vorteilhafte Ausgestaltungen des Verfahrens und der Anordnung sind Gegenstand der abhängigen Patentansprüche oder lassen sich der nachfolgenden Beschreibung sowie dem Ausführungsbeispiel entnehmen.

Bei dem vorgeschlagenen Verfahren zur Positionsbestimmung mit Hilfe eines Permanentmagneten wird am Ort eines Positionssensors der Vektor und der örtliche Gradient der magnetischen Flussdichte $\vec{B}$ des Permanentmagneten mit Magnetfeld-Sensoren gemessen. Aus dem Vektor und dem örtlichen Gradienten der magnetischen Flussdichte $\vec{B}$ wird dann die Position $\vec{r}$ und die Orientierung des magnetischen Dipols des Permanentmagneten relativ zum Positionssensor berechnet. Diese Berechnung erfolgt in bekannter Weise auf Basis der bekannten Dipolgleichung. Das vorgeschlagene Verfahren zeichnet sich gegenüber der bisherigen Methode dadurch aus, dass ein kugelförmiger Permanentmagnet mit homogener Magnetisierung eingesetzt wird.

Durch den Einsatz eines kugelförmigen Permanentmagneten, der im Außenraum die Eigenschaften eines idealen magnetischen Dipols aufweist, wird die Bestimmung der Position unabhängig von der Bestimmung der Orientierung des magnetischen Dipols. So lassen sich bspw. für die Bestimmung der Position die Gleichungen aus T. Nara et al.: "A Closed-Form Formula for Magnetic Dipole Localization by Measurement of Its Magnetic Field and Spatial Gradients", IEEE TRANSACTIONS ON MAGNETICS, VOL. 42, NO. 10, OCTOBER 2006, pp. 3291-3293, verwenden. Für eine Wahl des Bezugskoordinatensystems am Positionssensor müssen diese Gleichungen lediglich mit dem Faktor -1 multipliziert werden. Zur Bestimmung der Orientierung, d.h. des Vektors des magnetischen Moments $\vec{m}$, können die Gleichungen für das Dipolfeld aus der Theorie übernommen und nach $m_x$, $m_y$ und $m_z$ aufgelöst werden.

Aus den Messwerten können beim vorgeschlagenen Verfahren die Position des kugelförmigen Permanentmagneten in ihren drei translatorischen Freiheitsgraden und die Orientierung seiner Magnetisierung in zwei rotatorischen Freiheitsgraden bestimmt werden. Der dritte rotatorische Freiheitsgrad kann nicht bestimmt werden, da das Magnetfeld des Permanentmagneten rotationssymmetrisch um seine Magnetisierungsachse ist.

Die vorgeschlagene Anordnung zur Positionsbestimmung umfasst entsprechend den kugelförmigen und homogen magnetisierten Permanentmagneten und einen getrennt vom Permanentmagneten angeordneten Positionssensor. Der Positionssensor ist zur Messung des Vektors und des örtlichen Gradienten der magnetischen Flussdichte $\vec{B}$ des Permanentmagneten am Ort des Positionssensors ausgebildet und weist eine Auswerteelektronik bzw. Auswerteeinrichtung auf, die aus dem Vektor und dem räumlichen Gradienten der magnetischen Flussdichte $\vec{B}$ die Position $\vec{r}$ und die Orientierung des magnetischen Dipols des Permanentmagneten relativ zum Positionssensor, vorzugsweise im Bezugssystem des Positionssensors, berechnet.

Vorzugsweise umfasst der Positionssensor bei dem vorgeschlagenen Verfahren und der zugehörigen Anordnung mehrere 3D-Magnetfeld-Sensoren, die in einer Ebene angeordnet sind. Der Positionssensor umfasst damit eine zweidimensionale Anordnung von Magnetfeld-Sensoren, die in der Lage sind, das Magnetfeld bzw. den magnetischen Flussdichtevektor in allen drei Raumrichtungen des kartesischen Koordinatensystems zu messen und daraus erstmalig geschlossen fünf der sechs mechanischen Freiheitsgrade des Permanentmagneten zu bestimmen. Die Magnetfeld-Sensoren sind in der Ebene so platziert, dass neben dem Magnetfeld bzw. magnetischen Flussdichtevektor auch dessen Gradienten in den beiden kartesischen Richtungen in der Ebene der Sensoren gemessen werden können.

Zur Bestimmung der Messgrößen werden vorzugsweise die folgenden beiden Gleichungen herangezogen:

$$\vec{r} = \begin{pmatrix} x_p \\ y_p \\ z_p \end{pmatrix} = 3 \cdot \frac{\begin{pmatrix} \partial_Y B_Y{}^2 + \partial_X B_X \cdot \partial_Y B_Y + \partial_Y B_Z{}^2 & -(\partial_X B_X \cdot \partial_Y B_X + \partial_Y B_X \cdot \partial_Y B_Y + \partial_X B_Z \cdot \partial_Y B_Z) & \partial_X B_Z \cdot \partial_Y B_Y - \partial_Y B_X \cdot \partial_Y B_Z \\ -(\partial_X B_X \cdot \partial_Y B_X + \partial_Y B_X \cdot \partial_Y B_Y + \partial_X B_Z \cdot \partial_Y B_Z) & \partial_X B_X{}^2 + \partial_X B_X \cdot \partial_Y B_Y + \partial_X B_Z{}^2 & \partial_X B_X \cdot \partial_Y B_Z - \partial_Y B_X \cdot \partial_X B_Z \\ \partial_X B_Z \cdot \partial_Y B_Y - \partial_Y B_X \cdot \partial_Y B_Z & \partial_X B_X \cdot \partial_Y B_Z - \partial_Y B_X \cdot \partial_X B_Z & \partial_Y B_X{}^2 - \partial_X B_X \cdot \partial_Y B_Y \end{pmatrix}}{\partial_X B_Z{}^2 \cdot \partial_Y B_Y - \partial_X B_X \cdot \partial_Y B_X{}^2 + \partial_X B_X \cdot \partial_Y B_Y{}^2 + \partial_X B_X \cdot \partial_Y B_Z{}^2 - \partial_Y B_X{}^2 \cdot \partial_Y B_Y - 2 \cdot \partial_Y B_X \cdot \partial_X B_Z \cdot \partial_Y B_Z + \partial_X B_Z{}^2 \cdot \partial_Y B_Y} \begin{pmatrix} B_X \\ B_Y \\ B_Z \end{pmatrix}$$

$$\begin{pmatrix} m_x \\ m_y \\ m_z \end{pmatrix} = \frac{2 \cdot \pi}{\mu_0} \cdot \sqrt{x_p{}^2 + y_p{}^2 + z_p{}^2} \cdot \begin{pmatrix} x_p{}^2 - 2 \cdot y_p{}^2 - 2 \cdot z_p{}^2 & 3 \cdot x_p \cdot y_p & 3 \cdot x_p \cdot z_p \\ 3 \cdot x_p \cdot y_p & -2 \cdot x_p{}^2 + y_p{}^2 - 2 \cdot z_p{}^2 & 3 \cdot y_p \cdot z_p \\ 3 \cdot x_p \cdot z_p & 3 \cdot y_p \cdot z_p & -2 \cdot x_p{}^2 - 2 \cdot y_p{}^2 + z_p{}^2 \end{pmatrix} \cdot \begin{pmatrix} B_x \\ B_y \\ B_z \end{pmatrix}$$

Während bei den bisher bekannten Methoden der linearen Positions-Sensorik mit permanentmagnetischen Gebern die Richtung der Magnetisierung sehr stark in den Messwert der linearen Position eingeht, tritt diese Querempfindlichkeit bei dem vorgeschlagenen Verfahren und der zugehörigen Anordnung nicht mehr auf. Auch wenn sich der Magnet in der Anordnung dreht, bspw. aufgrund mechanischer Toleranzen oder technisch bedingt, dann liefert die Messung einen genauen Wert für die translatorische Position des Geber-Magneten, der von diesen Drehungen unabhängig ist. Weiterhin bietet das vorgeschlagene Verfahren und die zugehörige Anordnung den Vorteil einer absoluten Skalierung der Ergebnisse nur aufgrund der Anordnung der Magnetfeld-Sensoren. Sind die gegenseitigen Positionen der Magnetfeld-Sensoren hinreichend genau bekannt, bspw. weil sie in Halbleitertechnologie mittels Lithographie auf einem Chip definiert sind, dann sind weder Kalibrierung noch Linearisierung der Messergebnisse erforderlich. Bei der vorgeschlagenen Anordnung lassen sich die Magnetfeld-Sensoren zusammen mit der Auswerteelektronik in einem ASIC (Application Specific Integrated Circuit) integrieren, da alle Magnetfeld-Sensoren in der Chipebene des ASIC angeordnet werden können.

Für die Messung des Vektors und des örtlichen Gradienten der magnetischen Flussdichte werden vorzugsweise fünf 3D-Magnetfeld-Sensoren, bspw. Hallsensoren, in kreuzförmiger Anordnung eingesetzt. Hierbei befinden sich vier der Magnetfeld-Sensoren an den Ecken eines gedachten Rechtecks, während der weitere Magnetfeld-Sensor im Zentrum des Rechtecks angeordnet ist. Selbstverständlich lassen sich auch andere geometrische Anordnungen von 3D-Magnetfeld-Sensoren in einer Ebene nutzen, um den Vektor der magnetischen Flussdichte $\vec{B}$ in drei Dimensionen sowie den örtlichen Gradienten in der Ebene der Sensoren in zwei kartesischen Raumrichtungen zu erfassen. Dies kann bspw. auch mit vier oder auch nur drei 3D-Magnetfeld-Sensoren erfolgen, aus deren Messwerten in Kombination mit einer Koordinatentransformation oder entsprechender Gewichtung der Messwerte ebenfalls die gesuchten Größen ermittelt werden können. Bei vier Magnetfeldsensoren kann bspw. eine rechteck- oder rautenförmige Anordnung gewählt werden, bei drei Magnetfeldsensoren bspw. eine Anordnung eines rechtwinkligen oder gleichseitigen Dreiecks. Bei diesen Anordnungen mit drei oder vier Magnetfeldsensoren können die Komponenten $B_x$, $B_y$ und $B_z$ des Vektors der magnetischen Flussdichte $\vec{B}$ entweder mit einem der 3D-Magnetfeld-Sensoren gemessen oder aus den Messwerten mehrerer oder aller 3D-Magnetfeld-Sensoren berechnet werden. Mit weniger als drei 3D-Magnetfeld-Sensoren ist die Bestimmung dieser Messgrößen nicht mehr möglich.

**Kurze Beschreibung der Zeichnungen**

Das vorgeschlagene Verfahren und die zugehörige Anordnung werden nachfolgend anhand eines Ausführungsbeispiels in Verbindung mit der Figur nochmals kurz erläutert. Hierbei zeigt:

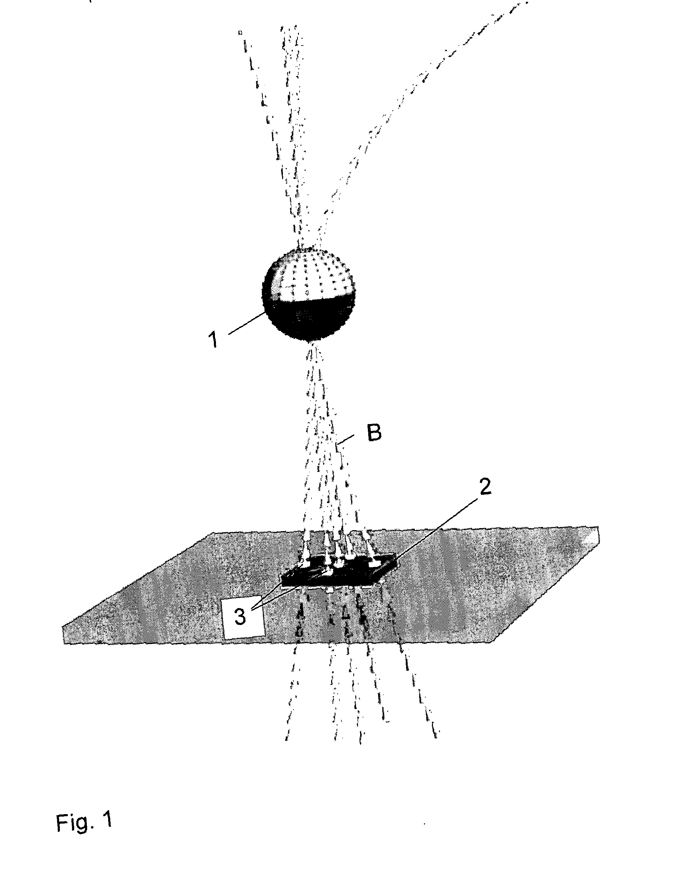

Fig. 1 eine schematische Darstellung der Ausgestaltung des Permanentmagneten und des Positionssensors beim vorgeschlagenen Verfahren.

**Wege zur Ausführung der Erfindung**

Im vorliegenden Ausführungsbeispiel ist der kugelförmige Permanentmagnet 1 über dem Positionssensor 2, einem ASIC, angebracht. Der Positionssensor 2 umfasst fünf kreuzförmig angeordnete 3D-Magnetfeld-Sensoren 3 in einem definierten Raster. Mit dem mittleren 3D-Magnetfeldsensor wird die magnetische Flussdichte $\vec{B}$ des Permanentmagneten 1 in allen drei Raumkomponenten gemessen. Die Gradienten dieser Komponenten werden mit den vier äußeren 3D-Magnetfeld-Sensoren bestimmt. Dazu werden - bezogen auf die Figur 1 - Messwert ($B_x$, $B_y$, $B_z$) des rechten Magnetfeld-Sensors minus dem Messwert ($B_x$, $B_y$, $B_z$) des linken Magnetfeld-Sensors zur Bestimmung der Ableitung nach x und Messwert ($B_x$, $B_y$, $B_z$) des oberen Magnetfeld-Sensors minus dem Messwert ($B_x$, $B_y$, $B_z$) des unteren Magnetfeld-Sensors zur Bestimmung der Ableitung nach y verwendet. Durch die kreuzförmige Anordnung symmetrisch zum mittleren 3D-Magnetfeld-Sensor ergibt sich damit ein Wert, der repräsentativ der Position des mittleren Magnetfeld-Sensors zugeordnet werden kann. Somit sind alle Messwerte näherungsweise für die Position des mittleren 3D-Magnetfeldsensors bekannt. Durch Einsetzen dieser Messwerte in die weiter oben beschriebenen Gleichungen können dann die Position und Orientierung des magnetischen Dipols des Permanentmagneten 1 im Bezugssystem des Positionssensors 2 bestimmt werden. Die Auswertung erfolgt hierbei direkt durch die integrierte Auswerteschaltung im Positionssensor 2, so dass dieser die Zahlenwerte für die Position und Orientierung ausgibt. Eine Befestigung des Permanentmagneten 1 und des Positionssensors 2 an unterschiedlichen Körpern, die relativ zueinander beweglich sind, ermöglicht somit jederzeit die Bestimmung von relativer Position und Orientierung der beiden Körper zueinander.

Bezugszeichenliste

1 Permanentmagnet

2 Positionssensor

3 3D-Magnetfeld-Sensor

**Patentansprüche**

1. Verfahren zur Positionsbestimmung mit Hilfe eines Permanentmagneten (1), bei dem

- am Ort eines Positionssensors (2) ein Vektor und ein örtlicher Gradient einer magnetischen Flussdichte $\vec{B}$ des Permanentmagneten (1) gemessen wird, und

- aus dem Vektor und dem örtlichen Gradienten der magnetischen Flussdichte $\vec{B}$ die Position $\vec{r}$ und die Orientierung des magnetischen Dipols des Permanentmagneten (1) relativ zum Positionssensor (2) berechnet werden,

**dadurch gekennzeichnet,**
**dass** ein kugelförmiger Permanentmagnet (1) mit homogener Magnetisierung eingesetzt wird.

2. Verfahren nach Anspruch 1,
**dadurch gekennzeichnet,**

**dass** der Vektor und der örtliche Gradient der magnetischen Flussdichte $\vec{B}$ mit mehreren 3D-Magnetfeld-Sensoren (3) gemessen werden, die im Positionssensor (2) in einer Ebene so angeordnet sind, dass sie den örtlichen Gradienten in zwei kartesischen Raumrichtungen in der Ebene messen können.

3.  Verfahren nach Anspruch 2,
    **dadurch gekennzeichnet,**
    **dass** als 3D-Magnetfeld-Sensoren (3) Hall-Sensoren eingesetzt werden.

4.  Verfahren nach Anspruch 2 oder 3,
    **dadurch gekennzeichnet,**
    **dass** für die Messung des Vektors und des örtlichen Gradienten der magnetischen Flussdichte $\vec{B}$ fünf 3D-Magnetfeld-Sensoren (3) eingesetzt werden, von denen vier an den vier Ecken eines gedachten Rechtecks und einer im Zentrum des Rechtecks angeordnet werden.

5.  Verfahren nach einem der Ansprüche 1 bis 4,
    **dadurch gekennzeichnet,**
    **dass** die Position $\vec{r}$ des magnetischen Dipols durch folgende Gleichung bestimmt wird:

$$\vec{r} = \begin{pmatrix} x_p \\ y_p \\ z_p \end{pmatrix} = 3 \frac{\begin{pmatrix} \partial_r B_r^2 + \partial_x B_x \cdot \partial_r B_r + \partial_r B_z^2 & -(\partial_x B_x \cdot \partial_r B_x + \partial_r B_x \cdot \partial_r B_r + \partial_x B_z \cdot \partial_r B_z) & \partial_x B_z \cdot \partial_r B_r - \partial_r B_x \cdot \partial_r B_z \\ -(\partial_x B_x \cdot \partial_r B_x + \partial_r B_x \cdot \partial_r B_r + \partial_x B_z \cdot \partial_r B_z) & \partial_x B_x^2 + \partial_x B_x \cdot \partial_r B_r + \partial_x B_z^2 & \partial_r B_x \cdot \partial_r B_z - \partial_r B_x \cdot \partial_x B_z \\ \partial_x B_z \cdot \partial_r B_r - \partial_r B_x \cdot \partial_r B_z & \partial_x B_x \cdot \partial_r B_z - \partial_r B_x \cdot \partial_x B_z & \partial_r B_r^2 - \partial_x B_x \cdot \partial_r B_r \end{pmatrix} \begin{pmatrix} B_x \\ B_r \\ B_z \end{pmatrix}}{\partial_x B_x^2 \cdot \partial_r B_r - \partial_x B_x \cdot \partial_r B_x^2 + \partial_x B_z \cdot \partial_r B_r^2 + \partial_x B_x \cdot \partial_r B_z^2 - \partial_r B_x^2 \cdot \partial_r B_r - 2 \cdot \partial_r B_x \cdot \partial_x B_z \cdot \partial_r B_z + \partial_x B_z^2 \cdot \partial_r B_r}$$

6.  Verfahren nach einem der Ansprüche 1 bis 5,
    **dadurch gekennzeichnet,**
    **dass** die Orientierung des magnetischen Dipols durch folgende Gleichung bestimmt wird:

$$\begin{pmatrix} m_x \\ m_y \\ m_z \end{pmatrix} = \frac{2 \cdot \pi}{\mu_0} \sqrt{x_p^2 + y_p^2 + z_p^2} \cdot \begin{pmatrix} x_p^2 - 2 \cdot y_p^2 - 2 \cdot z_p^2 & 3 \cdot x_p \cdot y_p & 3 \cdot x_p \cdot z_p \\ 3 \cdot x_p \cdot y_p & -2 \cdot x_p^2 + y_p^2 - 2 \cdot z_p^2 & 3 \cdot y_p \cdot z_p \\ 3 \cdot x_p \cdot z_p & 3 \cdot y_p \cdot z_p & -2 \cdot x_p^2 - 2 \cdot y_p^2 + z_p^2 \end{pmatrix} \cdot \begin{pmatrix} B_x \\ B_y \\ B_z \end{pmatrix}$$

7.  Verfahren nach einem der Ansprüche 1 bis 6,
    **dadurch gekennzeichnet,**
    **dass** der Permanentmagnet (1) und der Positionssensor (2) jeweils an Körpern befestigt werden, deren relative Position und Orientierung bestimmt werden soll.

8.  Anordnung zur Positionsbestimmung mit einem Permanentmagneten (1) und einem getrennt vom Permanentmagneten (1) angeordneten Positionssensor (2),
    wobei der Positionssensor (2) zur Messung eines Vektors und eines örtlichen Gradienten einer magnetischen Flussdichte $\vec{B}$ des Permanentmagneten (1) am Ort des Positionssensors (2) ausgebildet ist und eine Auswerteelektronik aufweist, die aus dem Vektor und dem räumlichen Gradienten der magnetischen Flussdichte $\vec{B}$ die Position $\vec{r}$ und die Orientierung des magnetischen Dipols des Permanentmagneten (1) relativ zum Positionssensor (2) berechnet, und
    wobei der Permanentmagnet (1) kugelförmig ist und eine homogene Magnetisierung aufweist.

9.  Anordnung nach Anspruch 8,
    **dadurch gekennzeichnet,**
    **dass** der Positionssensor (2) zur Messung des Vektors und des örtlichen Gradienten der magnetischen Flussdichte

$\vec{B}$ mehrere 3D-Magnetfeld-Sensoren (3) aufweist, die in einer Ebene so angeordnet sind, dass sie den örtlichen Gradienten in zwei kartesischen Raumrichtungen in der Ebene messen.

**10.** Anordnung nach Anspruch 9,
**dadurch gekennzeichnet,**
**dass** die 3D-Magnetfeld-Sensoren Hall-Sensoren sind.

**11.** Anordnung nach Anspruch 9 oder 10,
**dadurch gekennzeichnet,**
**dass** der Positionssensor (2) für die Messung des Vektors und des örtlichen Gradienten der magnetischen Flussdichte $\vec{B}$ fünf 3D-Magnetfeld-Sensoren (3) aufweist, von denen vier an den vier Ecken eines gedachten Rechtecks und einer im Zentrum des Rechtecks angeordnet sind.

**12.** Anordnung nach einem der Ansprüche 8 bis 11,
**dadurch gekennzeichnet,**
**dass** die Auswerteelektronik so ausgebildet ist, dass sie die Position $\vec{r}$ des magnetischen Dipols durch folgende Gleichung bestimmt:

$$\vec{r} = \begin{pmatrix} x_p \\ y_p \\ z_p \end{pmatrix} = 3 \frac{\begin{pmatrix} \partial_y B_y{}^2 + \partial_x B_x \cdot \partial_y B_y + \partial_y B_z{}^2 & -(\partial_x B_x \cdot \partial_y B_x + \partial_y B_x \cdot \partial_y B_y + \partial_x B_z \cdot \partial_y B_z) & \partial_x B_z \cdot \partial_y B_y - \partial_y B_x \cdot \partial_y B_z \\ -(\partial_x B_x \cdot \partial_y B_x + \partial_y B_x \cdot \partial_y B_y + \partial_x B_z \cdot \partial_y B_z) & \partial_x B_x{}^2 + \partial_x B_x \cdot \partial_y B_y + \partial_x B_z{}^2 & \partial_x B_x \cdot \partial_y B_z - \partial_y B_x \cdot \partial_x B_z \\ \partial_x B_z \cdot \partial_y B_y - \partial_y B_x \cdot \partial_y B_z & \partial_x B_x \cdot \partial_y B_z - \partial_y B_x \cdot \partial_x B_z & \partial_y B_x{}^2 - \partial_x B_x \cdot \partial_y B_y \end{pmatrix}}{\partial_x B_x{}^2 \cdot \partial_y B_y - \partial_x B_x \cdot \partial_y B_x{}^2 + \partial_x B_x \cdot \partial_y B_y{}^2 + \partial_x B_x \cdot \partial_y B_z{}^2 - \partial_y B_x{}^2 \cdot \partial_y B_y - 2 \cdot \partial_y B_x \cdot \partial_x B_z \cdot \partial_y B_z + \partial_x B_z{}^2 \cdot \partial_y B_y} \begin{pmatrix} B_x \\ B_y \\ B_z \end{pmatrix}$$

**13.** Anordnung nach einem der Ansprüche 8 bis 12,
**dadurch gekennzeichnet,**
**dass** die Auswerteelektronik so ausgebildet ist, dass sie die Orientierung des magnetischen Dipols durch folgende Gleichung bestimmt:

$$\begin{pmatrix} m_x \\ m_y \\ m_z \end{pmatrix} = \frac{2 \cdot \pi}{\mu_0} \cdot \sqrt{x_p{}^2 + y_p{}^2 + z_p{}^2} \begin{pmatrix} x_p{}^2 - 2 \cdot y_p{}^2 - 2 \cdot z_p{}^2 & 3 \cdot x_p \cdot y_p & 3 \cdot x_p \cdot z_p \\ 3 \cdot x_p \cdot y_p & -2 \cdot x_p{}^2 + y_p{}^2 - 2 \cdot z_p{}^2 & 3 \cdot y_p \cdot z_p \\ 3 \cdot x_p \cdot z_p & 3 \cdot y_p \cdot z_p & -2 \cdot x_p{}^2 - 2 \cdot y_p{}^2 + z_p{}^2 \end{pmatrix} \begin{pmatrix} B_x \\ B_y \\ B_z \end{pmatrix}$$

**14.** Anordnung nach einem der Ansprüche 8 bis 13,
**dadurch gekennzeichnet,**
**dass** der Positionssensor (2) ein ASIC ist.

Fig. 1

**Europäisches Patentamt**
**European Patent Office**
**Office européen des brevets**

## EUROPÄISCHER RECHERCHENBERICHT

Nummer der Anmeldung

EP 09 00 6979

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 98/49938 A (LUCENT MEDICAL SYSTEMS INC [US]; HAYNOR DAVID R [US]; SOMOGYI CHRISTOP) 12. November 1998 (1998-11-12) <br> * Seite 1, Zeile 10 - Zeile 14 * <br> * Seite 10, Zeile 2 - Seite 18, Zeile 11; Abbildung 4 * <br> * Seite 30, Zeile 24 - Seite 31, Zeile 24; Anspruch 12 * <br> ----- | 1-4, 7-11,14 | INV. <br> G01V3/08 <br><br> ADD. <br> G01V15/00 |
| Y | WO 2007/130510 A (YELLEN BENJAMIN [US]) 15. November 2007 (2007-11-15) <br> * Absätze [0001], [0004], [0021]; Anspruch 22; Abbildung 1 * <br> ----- | 1-4, 7-11,14 | |

| RECHERCHIERTE SACHGEBIETE (IPC) |
|---|
| G01V <br> A61B |

Der vorliegende Recherchenbericht wurde für alle Patentansprüche erstellt

| Recherchenort | Abschlußdatum der Recherche | Prüfer |
|---|---|---|
| Den Haag | 16. September 2009 | Häusser, Thomas |

**ANHANG ZUM EUROPÄISCHEN RECHERCHENBERICHT
ÜBER DIE EUROPÄISCHE PATENTANMELDUNG NR.**

EP 09 00 6979

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-09-2009

| Im Recherchenbericht angeführtes Patentdokument | | Datum der Veröffentlichung | Mitglied(er) der Patentfamilie | | Datum der Veröffentlichung |
|---|---|---|---|---|---|
| WO 9849938 | A | 12-11-1998 | AT | 250386 T | 15-10-2003 |
| | | | AT | 227543 T | 15-11-2002 |
| | | | AU | 729379 B2 | 01-02-2001 |
| | | | AU | 7567398 A | 27-11-1998 |
| | | | BR | 9809789 A | 20-06-2000 |
| | | | CA | 2288118 A1 | 12-11-1998 |
| | | | CN | 1259025 A | 05-07-2000 |
| | | | DE | 69809411 D1 | 19-12-2002 |
| | | | DE | 69809411 T2 | 26-02-2004 |
| | | | DE | 69818526 D1 | 30-10-2003 |
| | | | DE | 69818526 T2 | 22-07-2004 |
| | | | EP | 1181891 A2 | 27-02-2002 |
| | | | EP | 0983018 A1 | 08-03-2000 |
| | | | ES | 2187970 T3 | 16-06-2003 |
| | | | JP | 4091991 B2 | 28-05-2008 |
| | | | JP | 2001524012 T | 27-11-2001 |
| | | | US | 6216028 B1 | 10-04-2001 |
| | | | US | 5879297 A | 09-03-1999 |
| WO 2007130510 | A | 15-11-2007 | US | 2007276218 A1 | 29-11-2007 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **G. Cauffet et al.** Geometric Contruction Technic to Localization of a Magnetic Dipole. *COMPUMAG,* 2001
- **S. Kumar et al.** Real-Time Tracking Magnetic Gradiometer for Underwater Mine Detection. *OCEANS 04. MTTS/IEEE TECHNO-OCEAN 04,* 2004, ISBN 0-7803-8669-8/04
- **S. Kumar et al.** Real-Time Tracking Gradiometer for use in an Autonomous Underwater Vehicle for Buried Minehunting. *OCEANS, 2005, Proceedings of MTS/IEEE,* 2005, ISBN 0-933957-34-3
- **Takaaki Nara et al.** A Closed-Form Formula for Magnetic Dipole Localization by Measurement of Its Magnetic Field and Spatial Gradients. *IEEE TRANSACTIONS ON MAGNETICS,* Oktober 2006, vol. 42, 3291-3293
- **Frahm, C. P.** Inversion of the magnetic field gradient equations for a magnetic dipole field. *Naval Coastal Systems Laboratory, Informal Report,* 1972, 135-172
- **M. C. Jeoffreys.** DISCRIMINATION AND IDENTDIFICATION OF UNEXPLODED ORDINANCES (USO) USING AIRBORNE MAGNETIC GRADIENTS. *Mathematics in Industry Study Groups in South Africa > MISGA 2006, University of the Witwatersrand,* 23. Januar 2006
- **S. L. Helwig e.** Inversion von ortsaufgelösten Wirbelstrommessdaten zur Bestimmung der Lage und Geometrie von Landminen. *DGZfP-Berichtsband 94-CD,* 2005
- **T. Nara et al.** A Closed-Form Formula for Magnetic Dipole Localization by Measurement of Its Magnetic Field and Spatial Gradients. *IEEE TRANSACTIONS ON MAGNETICS,* Oktober 2006, vol. 42, 3291-3293